# EUROPÄISCHE PATENTSCHRIFT

(11) **EP 0 692 371 B1**
(45) Veröffentlichungstag und Bekanntmachung des Hinweises auf die Patenterteilung: **28.03.2001**
(21) Anmeldenummer: 95810384.8
(22) Anmeldetag: 09.06.1995
(51) Int. Cl.: B32B 15/08, B32B 15/20

(54) **Umformbare Verbundplatte**
Deformable composite panel
Panneau composite déformable

(30) Priorität: 13.07.1994 CH 223394
(43) Veröffentlichungstag der Anmeldung: 17.01.1996
(73) Patentinhaber: Alusuisse Technology & Management AG, 8212 Neuhausen am Rheinfall (CH)
(72) Erfinder: Bassi, Corrado, CH-3968 Veyras (CH); Florey, Bernard, CH-3970 Loc/Sierre (CH)

(56) Entgegenhaltungen:
- EP-A- 0 167 455
- EP-A- 0 281 339
- JP-A- 3 138 140
- JP-A- 4 043 027
- US-A- 4 330 587
- CHEMICAL ABSTRACTS, vol. 117, no. 14, 5.Oktober 1992 Columbus, Ohio, US; abstract no. 135893y, 'ALUMINIUM ALLOY LAMINATES FOR PRESS FORMING' Seite 313; Spalte 1; & JP-A-04 043 027 (KOBE STEEL, LTD.) 13.Februar 1992
- CHEMICAL ABSTRACTS, vol. 116, no. 10, 9.März 1992 Columbus, Ohio, US; abstract no. 89284e, 'VIBRATION-DAMPING ALUMINIUM LAMINATES WITH POLYMER' Seite 360; Spalte 2; & JP-A-03 138 140 (KOBE STEEL, LTD.) 12.Juni 1991
- DATABASE WPI Week 9405 Derwent Publications Ltd., London, GB; AN 94-039877 (05) & JP-A-05 345 386 (KOBE STEEL, LTD.) , 27.Dezember 1993
- DATABASE WPI Week 8124 Derwent Publications Ltd., London, GB; AN 81-43715D (24) & SU-A-767 149 (POZAMONTIR A G) , 1.Oktober 1980
- DATABASE WPI Week 9415 Derwent Publications Ltd., London, GB; AN 94-123826 (15) & JP-A-06 071 806 (KOBE STEEL, LTD.) , 15.März 1994

## Beschreibung

Vorliegende Erfindung betrifft eine umformbare Verbundplatte aus mehreren Schichten mit mindestens einer Deckschicht aus einer Aluminiumlegierung und einer Kernschicht aus Kunststoff sowie Verfahren zur Herstellung der Verbundplatten und die Verwendung der Verbundplatten.

Aus der EP 0 019 835 sind verformbare Metall-Plastik-Metall-Strukturlaminate und Verfahren zur Herstellung von solchen Laminaten bekannt geworden. Bei den Metall-Polymer-Metall-Strukturlaminaten kann es sich beispielsweise um einen Kern aus polymerischem Harz handeln, welches beidseitig mit einer Metallhaut, beispielsweise einer Dicke von 0,05 bis 0,5 mm, bedeckt ist. Durch die Wahl des Metall-Polymer-Metall-Laminates wird eine gute Streckverformung ohne Delaminierung erreicht. Wird als Metallhaut Aluminium oder Aluminiumlegierungen verwendet, so kann die Dicke jeder Metallhaut von 150 bis 300 µm betragen, und die Dicke der dazwischenliegenden polymerischen Harzschicht zwischen 450 und 900 µm betragen. Daraus errechnet sich eine maximale Dicke des Laminates von 750 bis 1500 µm. Die beschriebenen strukturellen Laminate weisen relativ geringe Blechstärken und eine dicke Kunststoffschicht auf. Dies soll zu Laminaten hoher Schälfestigkeit führen.

In der EP 0 184 549 wird eine dünne umformbare Verbundplatte aus mehreren Schichten beschrieben, die aus mindestens einer Deckschicht aus einer Aluminiumlegierung mit einer flachen Spannungs-Dehnungskurve und einer thermoplastischen Kernschicht aus Kunststoff hergestellt wird. Es werden Deckschichten mit 0,05 bis 1 mm Dicke beschrieben und Kernschichten von 0,5 bis 3 mm. Als Deckschichten werden z.B. eisenhaltige Aluminiumlegierungen beschrieben. Diese Verbundplatten beziehen sich auf bestimmte Legierungen und weisen eine ausserordentlich dicke Kernschicht auf.

Die genannten Verbundplatten sind für viele Einsatzzwecke geeignet, sind aber beispielsweise für den Einsatz im Geräte- und Automobilbau nicht genügend. Dort besteht ein hoher Bedarf an Verbundplatten hoher struktureller Festigkeit und gleichzeitig mit schall- und vibrationsadsorbierendem Verhalten. Solche Verbundplatten werden beispielsweise für Gehäuse von Maschinen und Geräten und insbesondere im Karosseriebau von Landfahrzeugen, wie beispielsweise Lastkraftwagen und Personenkraftwagen benötigt. Entscheidend für den praktischen Einsatz sind eine gute Umformbarkeit bei den an sich bekannten Umformtechniken, wie z.B. Tiefziehen, Streckziehen oder Biegen, und die Anwendbarkeit konventioneller Fügeverfahren, wie z.B. Bördeln, Punktschweissen, Clinchen usw. Dies ist bei Verbundplatten mit dicken Kernschichten nicht gewährleistet. Beispielsweise für den Bau von Fahrzeugkarosserien und Motoren, Gehäusen und dergleichen sind Sandwich-Feinbleche aus zwei Stahlblechen und einer dazwischenliegenden viscoelastischen Schicht bekannt geworden. Für solche Sandwich-Feinbleche bietet sich nach bisheriger Erkenntnis Stahl als Deckblechmaterial vorzüglich an, da mit Stahl in Verbindung mit einer viscoelastischen Zwischenschicht ein sehr guter Schalldämpfeffekt erzielt werden kann. Der Grad der Schalldämpfung mit solchen Sandwich-Feinblechen aus Stahl liegt wesentlich über dem des reinen Stahls und ganz wesentlich über demjenigen des Aluminiums. Aluminium hingegen wäre wegen seines strukturellen Verhaltens und seiner niedrigen Dichte ein vorzügliches Material.

Aufgabe vorliegender Erfindung war ist, eine Verbundplatte zur Verfügung zu stellen, welche optimale Lärmdämmeigenschaften hat, leicht umformbar ist und zu nahezu beliebigen Formkörpern beispielsweise durch Tiefziehen oder Streckziehen oder anderen Umformverfahren unterzogen werden kann und sich die Vorteile des Aluminium, wie Korrosionsfestigkeit, niedrige Dichte usw. zueigen macht.

Erfindungsgemäss wird dies dadurch erreicht, dass die Kernschicht 20 bis 150 µm und jede Deckschicht 400 bis 1600 µm dick ist und jede Deckschicht aus einer aushärtbaren Aluminiumlegierung der Gattung AlMgSi ist, wobei der Magnesium- und der Siliziumgehalt in einem Feld des ternären Zustandsdiagramms für AlMgSi-Legierungen mit den Eckpunkten
A = 1 % Silizium / 0,6 % Magnesium
B = 1,8 % Silizium / 0,6 % Magnesium
C = 1,8 % Silizium / 0,2 % Magnesium
D = 1,2 % Silizium / 0,2 % Magnesium
liegen.

Die Bedeutung von x in den Legierungsfamilien ist eine Zahl von 0 bis 9 und entsprechende Legierungen können den Registern für Aluminiumlegierungen entnommen werden.

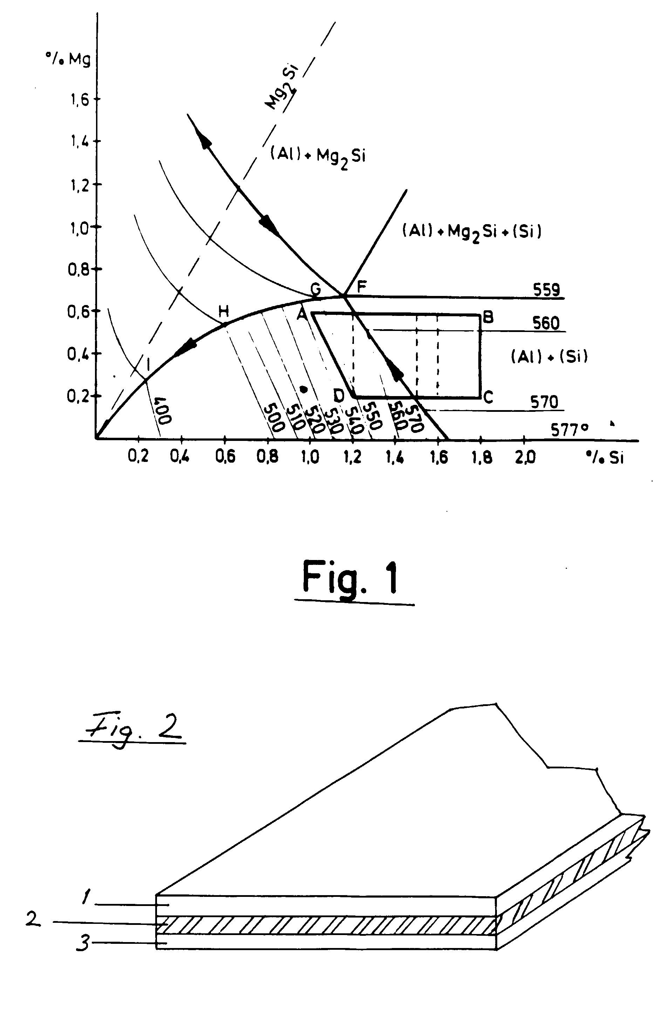

In Figur 1 ist das ternäre Zustandsdiagramm für derartige AlMgSi-Legierungen mit den entsprechenden Eckpunkten, die das zutreffende Feld definieren, abgebildet. Jene Figur 1 ist das ternäre Zustandsdiagramm der AlMgSi-Legierungen, d.h. das Diagramm der Löslichkeit im festen Zustand und ist dem Werk METALS HANDBOOK, 8th Edition, Vol. 8, Metallography, Structures and Phase Diagramms, ASM, 1973, S. 397, entnommen und in ein ortogonales Koordinatensystem umgezeichnet.

Die Deckschichten bestehen insbesondere aus Blechen, Bändern und Dünnbändern mit hoher mechanischer Festigkeit, guter Verformbarkeit und geringer Zipfelbildung. Insbesondere kann z.B. bei der genannten AlMgSi-Legierung der Magnesium- und der Siliziumgehalt der AlMgSi-Legierungen so eingestellt werden, dass sie einen bei den für diese Gattung üblichen Hochglüh- oder Lösungsglühtemperaturen von 450 bis 550°C in Alpha-Mischkristall unlösbaren, nach einem solchen Glühen in definiert feindisperser Form in der Matrix verbleibenden Siliziumüberschuss von mindestens 0,1 % , vorzugsweise von mindestens 0,2 % und insgesamt höchstens 1,8 % Silizium enthält. Die Legierung, aus welcher die Deckschicht hergestellt wird, kann auch noch Zusätze von maximal 0,3 % Chrom, Mangan, Zirkonium und/oder Titan enthalten. Die Legierung für die Deckschichten kann durch Strang-oder Bandgiessen, Warm- und Kaltwalzen zu den Blechen, Bändern und Dünnbändern hergestellt werden, wobei die Legierung bevorzugt nach dem Warmwalzen an der Luft abgekühlt wird. Die kaltgewalzte Legierung kann bis zu 2 Std., vorzugsweise 1 Std. und insbesondere höchstens 30 Min. einschliesslich Aufheizzeit, lösungsgeglüht werden. In ganz besonders bevorzugter Ausführungsform wird die Legierung im Verlauf des Kaltwalzens bei 1,1 bis 5-facher, vorzugsweise bei 1,3 bis 4-facher Enddicke lösungsgeglüht, abgeschreckt und kalt ausgehärtet sowie in diesem Zustand auf Enddicke kaltgewalzt.

Zweckmässig ist eine Verbundplatte, welche eine Kernschicht einer Dicke von 20 bis 150 µm und beidseitig der Kernschicht je eine Deckschicht aus Aluminiumlegierung von 400 bis 1600 µm Dicke enthält. Bevorzugt sind Verbundplatten, die eine Kernschicht in einer Dicke von 25 bis 50 µm aufweisen. Bevorzugt sind Verbundplatten, die Deckschichten von 400 bis 1500 µm enthalten.

Die Kernschicht aus Kunststoff kann ein schubweiches Material, beispielsweise ein Elastomer oder ein Thermoplast, darstellen. Geeignete Thermoplasten sind beispielsweise Polyolefine der Reihe der Polyethylene und der Reihe der Polypropylene, wobei kristalline und amorphe oder gemischte Formen angewendet werden können. Weitere Kernschichten aus Kunststoffen können aus der Reihe der Polyurethane oder der Reihe der acrylhaltigen, insbesondere der acrylhaltigen viscoelastischen Polymere ausgewählt werden. Das thermoplastische Polymere kann beispielsweise auch ein Copolymer aus Polyethylen oder Polypropylen und einer ethylenisch ungesättigten Carboxylsäure darstellen. Die Carboxylsäure ist bevorzugt Acrylsäure.

Die Kernschicht kann im Anwendungstemperaturbereich ein kurzzeitiges Elastizitätsmodul von 10³ bis 10⁸ Pascal und einen Verlustfaktor G^{II}/G^{I} von 0,1 bis 1 aufweisen. Der Anwendungstemperaturbereich kann z.B. Temperaturen von - 40°C bis + 100°C und zweckmässig von - 10°C bis + 40 °C umfassen.

Die Kernschicht aus Kunststoff kann beispielsweise eine Folie in einer Dicke von 25 bis 150 µm sein oder kann ein Folienverbund in einer Dicke von 20 bis 150 µm sein oder kann eine Lackschicht in einer Dicke von 20 bis 150 µm sein. Lackschichten weisen jedoch bevorzugt eine Gesamtdicke von 25 bis 50 µm auf. Eine Folie oder ein Folienverbund kann beispielsweise eine untere und eine obere Klebeschicht und dazwischen die Folie oder den Folienverbund aufweisen. Die Klebeschicht kann sowohl ein Klebstoff in Lack- oder Schichtform sein oder kann eine Klebefolie sein. Der Klebstoff kann in Mengen von z.B. 0,1 bis 15 g/m² angewendet werden oder eine Klebefolie kann eine Dicke von z.B. 6 bis 25 µm aufweisen. Ein Folienverbund kann beispielsweise zwei oder mehrere Monofolien gleichen oder unterschiedlichen Kunststoffmaterials enthalten. Die umformbaren Verbundplatten nach vorliegender Erfindung weisen bevorzugt eine untere und obere Deckschicht und dazwischenliegend eine der genannten Kernschichten auf. Zu den zweckmässigen Ausführungsformen gehören Verbundplatten, welche eine untere und eine obere Deckschicht aufweisen, und die Kernschicht eine Kunststoffolie darstellt, welche klebende Eigenschaften gegenüber den Metallschichten aufweist. In anderer bevorzugter Anwendungsform weist die Kernschicht eine Kunststoffolie oder einen Kunststoffolienverbund auf, die beidseitig über Klebstoffschichten mit den Deckschichten verbunden ist. Es ist auch möglich, eine oder beide Deckschichten mit einer Klebstoffschicht in flüssiger bis pastöser Form oder in Form eines trokkenen Lackes zu versehen und die beschichtete Seite der Deckschicht mit der unbeschichteten Seite einer nicht vorbehandelten Deckschicht in Berührung zu bringen oder die beiden mit dem Klebstoff behandelten Seiten der Deckschichten gegenseitig in Berührung zu bringen und trennfest miteinander zu verbinden. Die Klebstoffschicht kann beispielsweise durch Streichen, Sprühen, Rakeln, Aufrollen etc. vollflächig oder teilflächig, beispielsweise in Form eines Klebemusters auf der oder den entsprechenden Deckschichtoberflächen aufgebracht werden. Gegebenenfalls kann ein Lösungs- oder Dispergiermittel unter erniedrigtem Druck und/oder unter Einfluss von Wärme oder durch blosses Trocknenlassen entfernt werden. Die Deckschichten, sei es mit Hilfe von Klebstoffen, Folien oder Klebstoffen und Folien, können unter Einfluss von Druck und/oder Wärme und gegenseitig trennfest miteinander verbunden werden.

An den Verbundplatten nach vorliegender Erfindung können bei der Anwendung von zwei Deckschichten die Deckschichten gleiche oder unterschiedliche Dicken aufweisen. Bei Deckschichten unterschiedlicher Dicke kann die Dicke der zweiten Deckschicht bis zur 4-fachen Dicke der ersten Deckschicht betragen. Bevorzugt wird eine zweite Deckschicht, die 1,1- bis 3-fach dicker ist als die erste Deckschicht. Unterschiedliche Dicken in den Deckschichten führen zu Verbundplatten höherer Biegesteifigkeit als massive Bleche derselben Gesamtdicke. Im Bezug auf einen geringen Gewichtseinsatz ist bei der Wahl der Deckschichten-Dickenkombination die Dicke der einen Deckschicht möglichst klein zu wählen.

Bevorzugt sind Verbundplatten aus einem Kern und beidseitig des Kernes je einer Deckschicht, wobei die eine Deckschicht dicker ist, als die andere Deckschicht und die Deckschichten aus einer Legierung hoher Festigkeit aus den Legierungsfamilien AA 6xxx, AA 7xxx oder AA 5xxx mit einem Mangangehalt von grösser als 3%, besteht. Solche Verbundplatten weisen eine hohe Steifigkeit auf, insbesondere auch dann, wenn die dickere Deckschicht bei einem Formteil auf die Aussenseite zu liegen kommt. Auch bevorzugt sind Verbundplatten aus einem Kern und zwei Deckschichten, wobei die eine Deckschicht aus einer weichen Aluminiumlegierung der Legierungsfamilien AlMn,, AlMg mit einem Magnesiumgehalt von kleiner als 3% oder AlFeSi besteht. Solche Verbundplatten weisen eine gute Umformbarkeit und ein ausgezeichnetes Aussehen nach einer Lackierung auf, insbesondere dann, wenn bei einem Formteil die äussere Deckschicht aus einer weichen Legierung besteht.

Bei erfindungsgemässen Verbundplatten, enthaltend zwei Deckschichten, können die Deckschichten aus gleichen oder unterschiedlichen Legierungen sein.

Eine oder beide Deckschichten können auf einer oder beiden Oberflächen mit einem Rauhigkeitsmuster versehen sein. Insbesondere für die Verklebung bietet eine Oberfläche mit einem Rauhigkeitsmuster eine höhere spezifische Oberfläche an.

Die Texturierung der Oberfläche mit einem Rauhigkeitsmuster erfolgt in zweckmässiger Weise über ein entsprechendes, auf die Oberfläche von Arbeitswalzen aufgebrachtes Rauhigkeitsmuster, welches in einem Prägevorgang mit schwacher Stichabnahme auf die Oberfläche der Deckschichten übertragen wird. Wie bei jedem Prägevorgang sind die Oberflächentopographien der Arbeitswalze und der damit geprägten Komponentenoberflächen zueinander komplementär, d.h. Spitzen bzw. Erhebungen auf der Walzenoberfläche werden zu Tälern bzw. Vertiefungen in der Komponentenoberfläche und umgekehrt

Beim Aufrauhen der Oberfläche von Blechen aus Aluminium oder Aluminiumlegierungen erfolgt das Uebertragen des Rauhigkeitsmusters von den Arbeitswalzen auf das Blech bevorzugt beim letzten Kaltwalzstich als Prägeschritt mit einer Stichabnahme von 3 bis 5%.

Zur Durchführung des erfindungsgemässen Verfahrens geeignete Rauhigkeitsmuster egeben sich durch Prägen einer Oberflächentextur mit Arbeitswalzen, deren Oberfläche nach den im folgenden beschriebenen Verfahren aufgerauht sind.
1. Funkenerodierverfahren (EDT-Electrical Discharge Texturing). Beim EDT-Verfahren wird die Walze längs einer Reihe von Elektroden bei gleichzeitiger axialer Oszillation gedreht und dabei die Oberfläche auf eine vorgewählte Rauhtiefe texturiert. Durch die Entladung elektrischer Energie zwischen der Walzenoberfläche und den über eine dielektrische Flüssigkeit getrennten Eleketroden werden auf der Walzenoberfläche kleine Krater gebildet. Die Rauheit der Walze kann auf bekannte Weise durch eine Reihe von Maschinen-Parametern eingestellt werden. Das Rauheitsmuster ist eine statistische Verteilung von Spitzen und Tälern. Das EDT-Verfahren ermöglicht die Einstellung von Mittenrauhwerten Ra zwischen 1 und 6 µm. Mittenrauhwert und Spitzenzahl sind miteinander weitgehend verknüpft. Für das erfindungsgemässe Verfahren besonders geeignet ist eine Oberflächentextur mit niedriger Rauheit und hoher Spitzenzahl.
2. Schleuderradverfahren (SBT-Shot Blast Texturing). Beim SBT-Verfahren wird das kantige Strahlmittel dem Schleuderrad zugeführt und von dort aus auf die Walze geschleudert. Beim Auftreffend auf die Walzenoberfläche geben die einzelnen Strahlkörner ihre kinetische Energie ab und verformen dabei die Oberfläche der Walze plastisch. Die Walzenrauheit kann durch die Wahl der Strahlmittelkorngrösse, die Drehzwahl des Schleuderrades sowie durch andere Maschinen-Parameter geregelt weerden. Erzielbar sind Mittenrauhwerte Ra zwischen 1,5 und 6 µm. Das Rauheitsmuster entspricht auch hier einer statistischen Verteilung von Spitzen und Tälern.
3. Lasertexverfahren. Bei diesem Verfahren wird ein Laserstrahl durch eine Linse auf die Walzenoberfläche fokussiert und durch ein Chopperrad unterbrochen. Dabei dreht sich die Walze und wird axial verschoben. Auf der Walzenoberfläche wird im Brennpunkt des Laserstrahls das Walzenmaterial lokal aufgeschmolzen. Die Einstellung der gewünschten Rauhigkeit erfolgt über die Drehzahl der Walze, die Laserleistung sowie die Brennpunktlage des Laserstrahls. Die Rauheitsstruktur gleicht einer gleichmässigen Verteilung von Kratern auf der Walzenoberfläche.
4. Elektronenstrahlverfahren (EBG-Electron Beam Graving). Beim EBG-Verfahren wird eine rotierende Walze untr Vakuum axial an einer ortsfesten Elektronenstrahlkanone vorbeigeführt. Die hochenergetischen Elektronen geben beim Auftreffen auf die Walze ihre kinetische Energie in Form von Wärme ab. Bei genügend hoher Temperatur wird dann das vom Strahl getroffenen Volumen aufgeschmolzen und teilweise verdampft. Das auf der Walze erscheinende Rauheitsmuster ist vergleichbar mit demjenigen nach dem Lasertexverfahren. Die Kratertiefe ist beliebig einstellbar und hängt von der Schussdauer ab. Die Kraterdurchmesser hängen von der Fokussierung des Elektronenstrahls ab.
5. Isomill-Verfahren. Beim Isomill-Verfahren sind in die Oberflächen der Arbeitswalzen in Umfangrichtung und quer dazu in Achsenrichtung zur Erzeugung eines im wesentlichen quadratischen Rauheitsmusters eingraviert.

Die Deckschichten können gegebenenfalls anodisiert, mit einem anderen, die oberflächliche Oxidschicht verstärkenden Verfahren behandelt sein oder dekorativ anodisiert sein. Ferner können die Oberflächen der Deckschichten mit Konversionsschichten, z.B. einer Chromat-oder Phosphat-Konversionsschicht versehen sein. Ebenfalls können, insbesondere die Sichtflächen der Verbundplatten, strukturell und/oder chemisch verändert werden, d.h. mit Lackierungen, Chromatierungen, Phosphatierungen und anderen, die Anmutung des Materials verändernden oder verbessernden Schichten versehen sein. Die Verbundplatten nach vorliegender Erfindung können in Form von Platten oder in Bandfom hergestellt werden und die Bänder können gerollt oder gehaspelt und nach der Massgabe des Verbrauchs abgehaspelt und abgelängt werden.

Vorliegende Erfindung betrifft auch ein Verfahren zur Herstellung von erfindungsgemässen Verbundplatten, demgemäss eine erste Deckschicht beispielsweise von einem Haspel abgerollt und eine der Oberflächen vollständig mit einer Klebefolie als Kernschicht bedeckt wird. In der Regel enthält die Klebefolie eine Schutzschicht, damit die Klebefolie an sich selbst und an den Andrück- und Leitrollen nicht kleben bleibt. Die Klebefolie wird mit ihrer klebenden Seite auf eine der Oberflächen der Deckschicht gebracht und mittels Andrückrollen trennfest mit der Deckschicht verbunden. Anschliessend wird die Schutzfolie von der Klebefolie abgezogen. Von einem zweiten Haspel wird die zweite Deckschicht zugeführt und auf die Klebeschicht gebracht und unter Einfluss von Druck und/oder Wärme, beispielsweise zwischen Rollen oder Walzen oder in einer Bandpresse oder dergleichen, trennfest mit dem Deckschicht-Klebefolienverbund zu einem Dreifachverbund verarbeitet. Dieser Verbund kann wiederum aufgehaspelt oder gleich in Platten abgelängt werden.

In einem anderen Herstellungsverfahren können die erfindungsgemässen Verbundplatten derart hergestellt werden, dass eine erste Deckschicht beispielsweise als Band abgehaspelt oder abgerollt wird. Ein Klebstoff in flüssiger bis pastöser Form wird beispielsweise durch Sprühen, Streichen, Rakeln oder dergleichen wird eine der Oberflächen der ersten Deckschicht deckend aufgebracht und unter vermindertem Druck und/oder Temperatur wird ein allenfalls vorhandenes Lösungsmittel entfernt. Der Klebstoff bildet die Kernschicht. Die ) zweite Deckschicht, ebenfalls beispielsweise als Band aufgehaspelt, wird abgerollt und vorgewärmt und die mit Klebstoff versehene erste Deckschicht und die vorgewärmte zweite Deckschicht werden zusammengeführt, wobei der Klebstoff zwischen die beiden Deckschichten zu liegen kommt. Die Deckschichten werden durch Rollen oder Walzen oder in einer Bandpresse, beispielsweise unter Druck und/oder Temperatur trennfest miteinander verbunden, gegebenenfalls gekühlt und das Band wiederum aufgehaspelt oder direkt abgelängt. In diesem Verfahren kann die zweite Deckschicht beispielsweise schon derart vorbereitet werden, dass vorgängig die Deckschicht mit einem Klebstoff als Kernschicht in flüssiger bis pastöser Form bedeckt wird, allenfalls vorhandenes Lösungsmittel durch Unterdruck und/oder Wärme entfernt wird und gegebenenfalls auch eine Schutzfolie über den Klebstoff gelegt wird und das Band wieder aufgehaspelt wird. Wird nun eine solche Bandrolle eingesetzt, kann Klebstoffschicht gegen Klebstoffschicht gerichtet werden, und es findet eine innigere Verbindung zwischen den Klebstoffschichten statt, als dies zwischen Klebstoffschicht und Metall möglich wäre. Die Klebstoffschichten bilden dabei die Kernschicht in fertigem Verbund.

Die Figur 2 zeigt einen Schnitt an beliebiger Stelle einer erfindungsgemässen umformbaren Verbundplatte, beispielsweise aus den beiden Deckschichten 1 und 3 und der Kernschicht 2.

Vorliegende Erfindung betrifft auch Formteile enthaltend die umformbaren Verbundplatten gemäss vorliegender Erfindung. Formteile können beispielsweise Karosserieteile von Landfahrzeugen, Gehäuse, Gehäuseteile von Maschinen und Geräten, Abdeckungen und Verkleidungen an Maschinen, Geräten und Gebäuden sein. Karosserieteile können beispielsweise Motorhauben, Kofferraumhauben, Türen, Kotflügel, Innenkotflügel, Separationsteile zwischen Fahrgastzelle und Motorraum, Innenverkleidung von Türen, Dächer, Stossstangen 5 oder auch Chassisteile wie Längs- und Querträger oder Längs- und Querträgerversteifungen sein. Gehäuse und Gehäuseteile von Maschinen und Geräten können beispielsweise die Zylinderkopfabdeckungen oder Oelwannen an Verbrennungsmotoren, Verschalungen von Elektromotoren und dergleichen sein, ferner können dies Verkleidungsteile von Haushaltgeräten wie Kühlschränken, Waschmaschinen, Geschirrwaschmaschinen, Tiefkühltruhen, Tiefkühlschränken etc. sein. Abdeckungen, Trennwände, Wände, Böden, Decken usw. oder Formteile an Gebäuden usw. können ebenfalls umfasst sein. Ferner sind Teile, die Vibrationenen ausgesetzt sind, wie z.B. auch Gehäuse oder Abdeckungen von Baumaschinen oder Prüfgeräten aus den Verbundplatten erzeugbar.

Die Verbundplatten können auch ein- oder beidseitig mit Verkleidungen oder Dekorschichten versehen werden, wie z.B. Farb- oder Lackschichten oder auch Schichten aus Kunststoff oder Textilien oder textilähnlichem Material. Beispielsweise für Innenverkleidungen von Fahrzeugen, wie Fahrzeugtüren, können die Verbundplatten mit Leder, lederähnlichem oder textilem Material bezogen werden.

Die Verbundplatten nach vorliegender Erfindung lassen sich z.B. durch Tiefziehen, Streckziehen oder durch Kombinationen solcher Verfahren in nahezu beliebige Formteile umformen. Ferner lassen sich die Verbundplatten durch Biegen oder Abkanten in die gewünschte Form bringen und lassen sich durch beliebige Schneidoperationen in die gewünschte Grösse bringen. Auch lassen sich die Verbundplatten durch konventionelle Fügeverfahren verarbeiten. Die erfindungsgemässen Verbundplatten lassen sich beispielsweise durch Widerstandsschweissen, Bolzenschweissen, Laserstrahlschweissen, Punktschweissen, durch Kleben, Nieten, Schrauben, Falzen, Bördeln oder Klemmen zu grösseren Formteilen fügen.

## Patentansprüche

1. Umformbare Verbundplatte aus mehreren Schichten mit mindestens einer Deckschicht aus einer Aluminiumlegierung und einer Kernschicht aus Kunststoff,
dadurch gekennzeichnet, dass
die Kernschicht 20 bis 150 µm und jede Deckschicht 400 bis 1600 µm dick ist und jede Deckschicht aus einer aushärtbaren Aluminiumlegierung der Gattung AlMgSi ist, wobei der Magnesium- und der Siliziumgehalt in einem Feld des ternären Zustandsdiagramms für AlMgSi-Legierungen mit den Eckpunkten
A = 1 % Silizium / 0,6 % Magnesium
B = 1,8 % Silizium / 0,6 % Magnesium
C = 1,8 % Silizium / 0,2 % Magnesium
D = 1,2 % Silizium / 0,2 % Magnesium
liegen.

2. Verbundplatte nach Anspruch 1, dadurch gekennzeichnet, dass die Verbundplatte eine Kernschicht einer Dicke von 20 bis 150 µm und beidseitig der Kernschicht je eine Deckschicht von 400 bis 1600 µm, vorzugsweise von 400 bis 1500 µm, Dicke enthält.

3. Verbundplatte nach Anspruch 1, dadurch gekennzeichnet, dass die Kernschicht eine Dicke von 25 bis 50 µm aufweist.

4. Verbundplatte nach Anspruch 1, dadurch gekennzeichnet, dass die Kernschicht ein Elastizitätsmodul von 10³ bis 10⁸ Pascal und einen Verlustfaktor G^{II}/G^{I} von 0,1 bis 1 aufweist.

5. Verbundplatte nach Anspruch 1, dadurch gekennzeichnet, dass die Kernschicht ein acrylhaltiges Polymer und vorzugsweise ein acrylhaltiges viscoelastisches Polymer ist.

6. Verbundplatte nach Anspruch 1, dadurch gekennzeichnet, dass die Kernschicht eine viscoelastische polymere Schicht ist.

7. Verbundplatte nach Anspruch 1, dadurch gekennzeichnet, dass die Deckschichten unterschiedliche Dicken aufweisen und die Dicke der einen Deckschicht bis zur 4-fachen Dicke der anderen Deckschicht beträgt und vorzugsweise die eine Deckschicht die 1,1 bis 3-fache Dicke der anderen Deckschicht aufweist.

8. Verbundplatte nach Anspruch 1, dadurch gekennzeichnet, dass wenigstens eine der Oberflächen wenigstens einer der Deckschichten mit einem Rauhigkeitsmuster versehen ist.

9. Verbundplatte nach Anspruch 1, dadurch gekennzeichnet, dass die Kernschicht ein Lack, eine Folie, ein Folienverbund oder eine Kombination von Lack mit einer Folie oder einem Folienverbund oder darstellt.

10. Verfahren zur Herstellung von Verbundplatten nach Anspruch 1, dadurch gekennzeichnet, dass eine erste Deckschicht mit einer Klebefolie bedeckt wird und auf die Klebefolie die zweite Deckschicht aufgebracht wird und die Schichten unter Einfluss von Druck und/oder Wärme trennfest miteinander verbunden werden.

11. Verfahren zur Herstellung von Verbundplatten nach Anspruch 1, dadurch gekennzeichnet, dass eine erste Deckschicht mit einem Klebstoff in flüssiger bis pastöser Form bedeckt wird, vorhandene Lösungsmittel durch Unterdruck und/oder Wärme entfernt werden und die zweite Deckschicht dem Einfluss von Wärme unterworfen wird und in warmem Zustand und unter Einfluss von Wärme und/oder Druck auf die Klebstoffschicht aufgebracht und die Schichten dabei trennfest miteinander verbunden werden.

12. Verfahren nach Anspruch 11, dadurch gekennzeichnet, dass die zweite Schicht mit einem Klebstoff in flüssiger bis pastöser Form bedeckt wird, vorhandenes Lösungsmittel durch Unterdruck und/oder Wärme entfernt wird und in einem weiteren Arbeitsgang die zweite Schicht mit der Klebstoffschicht dem Einfluss von Wärme unterworfen wird und in warmem Zustand und unter weiterem Einfluss von Wärme und/oder Druck auf die Klebstoffschicht der ersten Deckschicht, wobei Klebstoffschicht auf Klebstoffschicht zu liegen kommt, aufgebracht und die Schichten dabei trennfest miteinander verbunden werden.

13. Formteile enthaltend umformbare Verbundplatten gemäss Anspruch 1.

14. Formteile, Karosserieteile von Landfahrzeugen, Gehäuse, Gehäuseteile von Maschinen und Geräten, Abdeckungen und Verkleidungen an Maschinen, Geräten und Gebäuden, enthaltend umformbare Verbundplatten gemäss Anspruch 1.

## Claims

1. Formable composite panel consisting of a plurality of layers with at least one outer layer consisting of an aluminium alloy and a plastic core layer, characterised in that the core layer is 20 to 150 µm thick, each outer layer is 400 to 1600 µm thick and each outer layer is made of an age-hardenable aluminium alloy of the AlMgSi-type, the magnesium and silicon content being situated in a field of the ternary phase diagram for AlMgSi alloys having the corner points
A = 1 % silicon/0.6 % magnesium
B = 1.8 % silicon/0.6 % magnesium
C = 1.8 % silicon/0.2 % magnesium
D = 1.2 % silicon/0.2 % magnesium.

2. Composite panel according to claim 1, characterised in that the composite panel has a core layer having a thickness of 20 to 150 µm and respective outer layers on either side of the core layer having a thickness of 400 to 1600 µm, preferably 400 to 1500 µm.

3. Composite panel according to claim 1, characterised in that the core layer has a thickness of 25 to 50 µm.

4. Composite panel according to claim 1, characterised in that the core layer has a modulus of elasticity of 10³ to 10⁸ Pascals and a loss factor G^{II}/G^{I} of 0.1 to 1.

5. Composite panel according to claim 1, characterised in that the core layer is an acrylic-containing polymer and preferably an acrylic-containing visco-elastic polymer.

6. Composite panel according to claim 1, characterised in that the core layer is a visco-elastic polymer layer.

7. Composite panel according to claim 1, characterised in that the outer layers have different thicknesses and the thickness of one outer layer is up to 4 times the thickness of the other outer layer and preferably one outer layer has 1.1 to 3 times the thickness of the other outer layer.

8. Composite panel according to claim 1, characterised in that at least one of the surfaces of at least one of the outer layers is provided with a roughness pattern.

9. Composite panel according to claim 1, characterised in that the core layer is a lacquer, a film, a film composite or a combination of lacquer with a film or a film composite.

10. Process for the production of composite panels according to claim 1, characterised in that a first outer layer is covered in an adhesive film, the second outer layer is applied to the adhesive film and the layers are joined permanently together by the application of pressure and/or heat.

11. Process for the production of composite panels according to claim 1, characterised in that a first outer layer is covered in an adhesive in liquid to pasty form, any solvents present are removed by negative pressure and/or heat, the second outer layer is subjected to the influence of heat and applied to the adhesive layer in the warm state by the application of heat and/or pressure and the layers are thus joined permanently together.

12. Process according to claim 11, characterised in that the second layer is covered in an adhesive in liquid to pasty form, any solvent present is removed by negative pressure and/or heat, the second layer with the adhesive layer is subjected to the influence of heat in another step and applied to the adhesive layer of the first outer layer in the warm state by the further application of heat and/or pressure, the adhesive layers bearing against one another and the layers thus being joined permanently together.

13. Shaped parts containing formable composite panels according to claim 1.

14. Shaped parts, body parts of land vehicles, housings, housing parts of machines and equipment, covers and casings for machines, equipment and buildings containing formable composite panels according to claim 1.

## Revendications

1. Plaque composite formable constituée par plusieurs couches avec au moins une couche de couverture en un alliage d'aluminium et une couche d'âme en matière plastique, caractérisée en ce que la couche d'âme est épaisse de 20 à 150 µm et chaque couche de couverture est épaisse de 400 à 1 600 µm, et chaque couche de couverture consiste en un alliage d'aluminium durcissable par précipitation du genre AlMgSi où la teneur en magnésium et la teneur en silicium sont situées dans un domaine du diagramme d'état ternaire pour les alliages AlMgSi ayant les points d'angle
A = 1 % de silicium/0,6 % de magnésium
B = 1,8 % de silicium/0,6 % de magnésium
C = 1,8 % de silicium/0,2 % de magnésium
D = 1,2 % de silicium/0,2 % de magnésium

2. Plaque composite selon la revendication 1, caractérisée en ce que la plaque composite contient une couche d'âme d'une épaisseur de 20 à 150 µm et de chaque côté de la couche d'âme une couche de couverture de 400 à 1 600 µm, de préférence de 400 à 1 500 µm.

3. Plaque composite selon la revendication 1, caractérisée en ce que la couche d'âme présente une épaisseur de 25 à 50 µm.

4. Couche composite selon la revendication 1, caractérisée en ce que la couche d'âme a un module d'élasticité de 10³ à 10⁸ Pa et un facteur de perte G^{II}/G^{I} de 0,1 à 1.

5. Plaque composite selon la revendication 1, caractérisée en ce que la couche d'âme est un polymère acrylique et de préférence un polymère acrylique viscoélastique.

6. Plaque composite selon la revendication 1, caractérisée en ce que la couche d'âme est une couche polymère viscoélastique.

7. Plaque composite selon la revendication 1, caractérisée en ce que les couches de couverture présentent des épaisseurs différentes et l'épaisseur d'une couche de couverture peut atteindre jusqu'à 4 fois l'épaisseur de l'autre couche de couverture et de préférence une couche de couverture a 1,1 à 3 fois l'épaisseur de l'autre couche de couverture.

8. Plaque composite selon la revendication 1, caractérisée en ce qu'au moins l'une des surfaces d'au moins l'une des couches de couverture est munie d'un motif de rugosité.

9. Plaque composite selon la revendication 1, caractérisée en ce que la couche d'âme est une laque, une feuille, un composite de feuilles ou une combinaison de laque avec une feuille ou un composite de feuilles.

10. Procédé de fabrication de plaques composites selon la revendication 1, caractérisé en ce qu'une première couche de couverture est recouverte d'une feuille adhésive et la deuxième couche de couverture est appliquée sur la feuille adhésive, et les couches sont liées entre elles d'une manière résistant à la séparation sous l'influence de la pression et/ou de la chaleur.

11. Procédé de fabrication de plaques composites selon la revendication 1, caractérisé en ce qu'une première couche de couverture est recouverte d'un adhésif sous forme liquide à pâteuse, les solvants présents sont éliminés sous pression réduite et/ou à la chaleur et la deuxième couche de couverture est soumise à l'influence de la chaleur et est appliquée sur la couche d'adhésif à l'état chaud et sous l'influence de la chaleur et/ou de la pression, et les couches sont alors liées entre elles d'une manière résistant à la séparation.

12. Procédé selon la revendication 11, caractérisé en ce que la deuxième couche est recouverte d'un adhésif sous forme liquide à pâteuse, le solvant présent est éliminé sous pression réduite et/ou à la chaleur et, dans une autre étape opératoire, la deuxième couche avec la couche d'adhésif est soumise à l'influence de la chaleur et est appliquée à l'état chaud et sous l'influence de la chaleur et/ou de la pression sur la couche d'adhésif de la première couche de couverture, une couche d'adhésif venant en contact avec l'autre couche d'adhésif, et les couches sont alors liées l'une à l'autre d'une manière résistant à la séparation.

13. Pièces mises en forme contenant des plaques composites formables selon la revendication 1.

14. Pièces mises en forme, pièces de carrosserie de véhicules routiers, boîtiers, pièces de boîtiers de machines et d'appareils, couvercles et habillages de machines, d'appareils et de bâtiments contenant des plaques composites formables selon la revendication 1.
